# EUROPÄISCHE PATENTSCHRIFT

(11) **EP 0 367 016 B1**
(45) Veröffentlichungstag und Bekanntmachung des Hinweises auf die Patenterteilung: **08.06.1994**
(21) Anmeldenummer: 89119237.9
(22) Anmeldetag: 17.10.1989
(51) Int. Cl.: B29B 15/02, B26D 1/00

(54) **Vorrichtung zum Aufbereiten von unvulkanisierten Kautschuk**
Device for preparing unvulcanised rubber
Dispositif pour préparer du caoutchouc non vulcanisé

(30) Priorität: 02.11.1988 DE 3837197
(43) Veröffentlichungstag der Anmeldung: 09.05.1990
(73) Patentinhaber: Continental Aktiengesellschaft, 30165 Hannover (DE)
(72) Erfinder: Mössinger, Jürgen, D-3006 Burgwedel 1 (DE); Stein, Siegfried, D-3008 Garbsen 4 (DE); Stephan, Max, D-3008 Garbsen 7 (DE); Feierabend, Ralf, Dr., D-3016 Seelze 5 (DE)

(56) Entgegenhaltungen:
- BE-A- 446 985
- DE-A- 2 142 689
- GB-A- 379 308
- GB-A- 771 877
- US-A- 1 878 453
- US-A- 1 949 066

## Beschreibung

Die Erfindung betrifft eine Vorrichtung zum Aufbereiten von unvulkanisiertem Kautschuk, der am Ende in Form von Strängen mit zerklüfteter Oberfläche für die Beschickung von Mischaggregaten vorliegen soll, unter Verwendung von ineinandergreifenden Kammwalzen (Schneidscheibenwellen).

In der US-A-1 878 453 wird eine Vorrichtung zum Schneiden von Gummiteilchen beschrieben. Die Vorrichtung weist mehrere Schneidscheiben auf, mit denen Gummifelle in Streifen geschnitten werden. Die Schneidscheiben sind am äußeren Umfang mit diagonalen Rillen und Stegen versehen, die zum Weiterbefördern der Gummistreifen dienen.

In einer älteren Patentanmeldung EP-A-336 099 wird ein Verfahren zur Polymerbeschickung an Mischaggregaten (Innenmischern und Walzwerken) beschrieben, bei dem zur Vergleichmäßigung des Einzugsverhaltens Polymere in Form von Strängen mit einer zerklüfteten und mit Einschnitten versehenen Oberfläche aufgegeben werden, wobei die Länge der Stränge wesentlich größer ist als deren Breite und Dicke. In der älteren Patentanmeldung wird als Vorrichtung zur Herstellung der Polymerstränge ein Extruder mit Lochscheibe genannt. Es hat sich jedoch gezeigt, daß hiermit eine optimale Zerklüftung der Strangoberflächen noch nicht erzielbar ist.

Der Erfindung liegt deshalb die Aufgabe zugrunde, eine Vorrichtung anzugeben, mit der unvulkanisierte Polymerstränge mit optimal zerklüfteter Oberflächenstruktur herstellbar sind und die hohe Durchsatzmengen erlaubt.

Diese Aufgabe wird bei einer Vorrichtung der eingangs genannten Art dadurch gelöst, daß zumindest die Schneidscheiben der einen Kammwalze zusätzlich mit einer Zahnung mit einem Messerschliff versehen sind.

Die Erfindung bietet den Vorteil, daß je nach Größe und Anordnung der Schneidzahnwellen unterschiedliche Beschickungsvarianten möglich sind. So kann man zum einen Syntheseballen der üblichen Abmessungen 200x400x600 mm oder auch unvulkanisierten Kautschuk in Form von Einzelscheiben variabler Dicke aufgeben, und zwar auch gleichzeitig mehrere Scheiben übereinander. Weiterhin können Mischungsfelle einzeln oder mehrfach endlich oder endlos aufgegeben werden. Schließlich ist eine Beschickung mit NK-Ballen unterschiedlicher Größenqualitäten und eine kontinuierliche Zuführung ungleicher Kautschukstücke möglich. Durch eine Auswahl der Scheibenbreite der Schneidzahnscheiben der Kammwalzen läßt sich die gewünschte Strangbreite der Kautschukstränge erzielen. Durch eine Variation des Luftspaltes zwischen den Kammwalzen, durch die Auswahl der Kammwalzen- bzw. Schneidzahnscheiben- und Friktionsscheibendurchmesser sowie durch die Art der Zahnung und die Rotationsgeschwindigkeiten der Kammwalzen läßt sich die Art der Oberflächenzerklüftungen bei der Herstellung der Polymerstränge in einem weiten Bereich variieren.

Die erfindungsgemäße Vorrichtung besteht im wesentlichen aus zwei ineinandergreifenden Kammwalzen und einem gemeinsamen Antrieb für beide Walzen. Selbstverständlich können bei Bedarf auch zwei separate Antriebe vorgesehen werden bzw. zur Erzeugung unterschiedlicher Drehgeschwindigkeiten entsprechende Getriebe vorgeschaltet werden. Der Kerngedanke der Erfindung besteht darin, eine zum Schneiden anderer Materialien an sich bekannte Kammwalzenmaschine zum Schneiden von unvulkanisiertem Kautschuk einzusetzen und zusätzlich die Schneidscheiben der Kammwalzen mit einer Zahnung zu versehen, um geschnittene Materialstränge mit einer zerklüfteten Oberfläche zu erhalten. Grundsätzlich können sowohl die Schneidscheiben mit dem größeren als auch die mit dem kleineren Durchmesser mit einer Zahnung versehen sein, doch ist es aus fertigungstechnischen Gründen günstiger, lediglich die Kammwalzenbereiche mit den größeren Schneidscheiben mit einer Zahnung zu versehen.

Nachfolgend wird ein Ausführungsbeispiel der Erfindung anhand einer Zeichnung näher erläutert. Es zeigt:
- Fig. 1: eine Vorrichtung zum Aufbereiten von unvulkanisiertem Kautschuk in einer Seitenansicht,
- Fig. 2: die beiden Kammwalzen der Fig. 1 in einem radialen Schnitt durch die Ebene II-II.

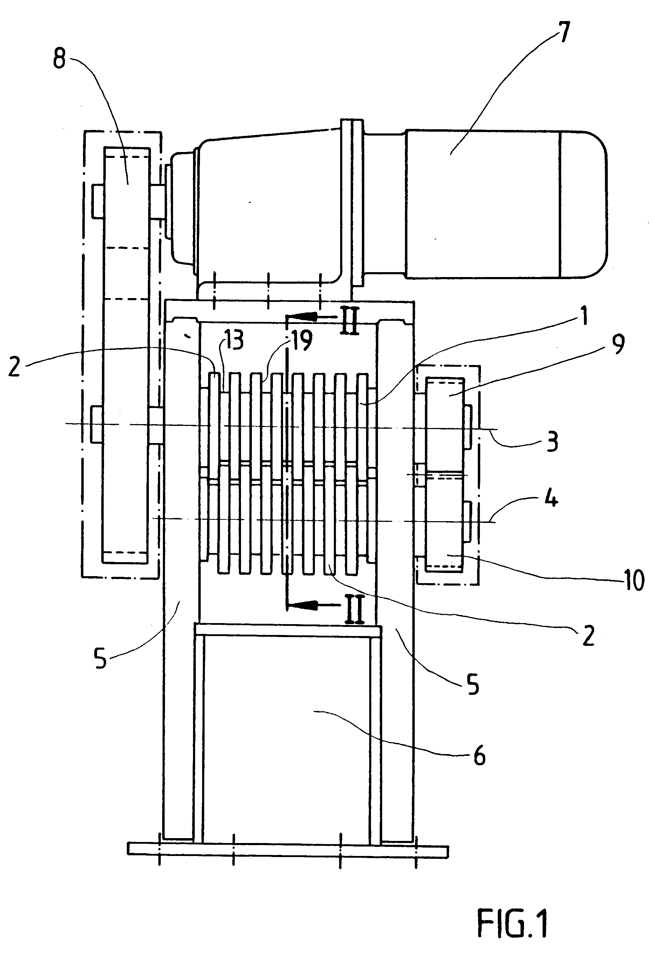

Die Vorrichtung gemäß Fig. 1 besteht im wesentlichen aus zwei ineinandergreifenden Kammwalzen 1 und 2 in Form von Schneidzahnwellen, die mit ihren Achsen 3, 4 in Ständern 5 eines Gehäuses 6 gelagert sind. Die beiden Kammwalzen 1, 2 werden von einem Motor 7 über einen Zahnkettentrieb 8 bzw. Zahnräder 9, 10 gemeinsam angetrieben.

Jede der beiden Kammwalzen 1, 2 weist im Bereich der äußeren Mantelfläche eine geometrische Konfiguration auf, bei der sich mit einer Zahnung 11 versehene Schneidzahnscheiben 12 größeren Durchmessers mit Friktionsscheiben 13 (ohne Zahnung) kleineren Durchmessers abwechseln. Die Zahnung 11 liegt bevorzugt in Form eines Messerschliffs vor. Der Durchmesser der Kammwalzen 1, 2 im Bereich der größeren Schneidzahnscheiben 12 kann zwischen 200 und 800 mm liegen, bei einem bevorzugten Ausführungsbeispiel beträgt er ca. 300 mm. Die Zahnung 11 auf den Schneidzahnscheiben 12 kann zwischen 30 und 300 Zähne, bevorzugt ca. 50 Zähne aufweisen, wobei die Zahntiefe etwa zwischen 3 und 10 mm liegen sollte. Der Durchmesser der Kammwalzen 1, 2 im Bereich der Friktionsscheiben 13 sollte um etwa 60 bis 200 mm unter dem der Schneidzahnscheiben 12 liegen, bei einem bevorzugten Beispiel beträgt er ca. 80 mm. Zwischen den beiden Kammwalzen 1, 2, d.h. genauer zwischen einer Schneidzahnscheibe 12 der einen Kammwalze und der benachbarten Friktionsscheibe 13 der anderen Kammwalze befindet sich ein Luftspalt 14, der 1 bis 10 mm betragen kann und bevorzugt in einem Bereich zwischen 2 und 4 mm liegt. Der Luftspalt 14 sollte durch eine Verschiebbarkeit einer der beiden Kammwalzen 1, 2 veränderbar sein, um bei sich ändernden Materialeigenschaften bzw. Materialdicken optimal eingestellt werden zu können. Im beschriebenen Beispiel, in dem die beiden Kammwalzen 1, 2 gleiche Durchmesser aufweisen, erfolgt der gemeinsame Antrieb über einen Drehstrommotor von ca. 30 KW mit 67 U/Min. Hinter den Kammwalzen 1, 2 befinden sich zwei Abstreifer 15.

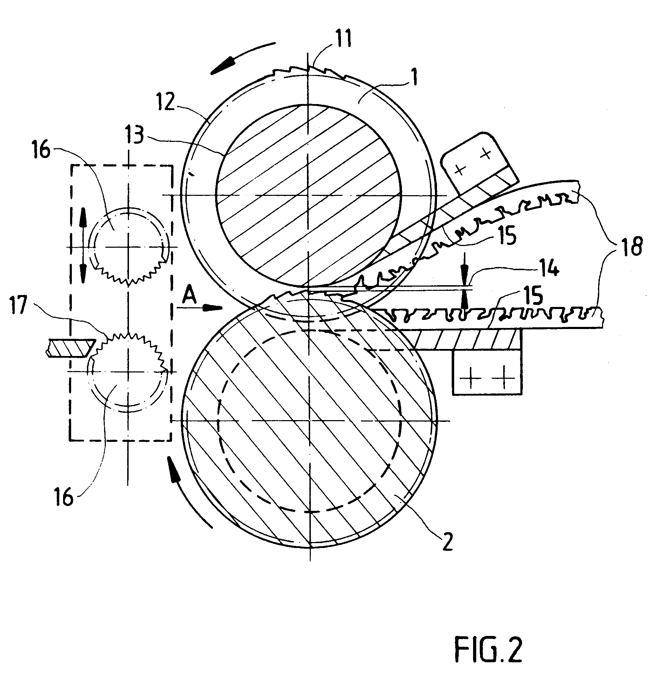

Bei der bisher beschriebenen Vorrichtung können für den Fall, daß der unvulkanisierte Kautschuk in Ballenform oder in Form von Langfellen aufgegeben und weiterhin auf eine gewünschte Länge gebracht werden soll, den Kammwalzen 1, 2 zwei Fütterungswalzen 16 vorgeschaltet sein, die sich in Fig. 2 im gestrichelten Bereich befinden. Um das Kautschukmaterial griffig zu erfassen, sind die Fütterungswalzen 16 mit einer Riffelung 17 versehen.

Nachfolgend wird die Wirkungsweise der Vorrichtung anhand der Fig. 2 erläutert. Bei rotierenden Kammwalzen 1, 2 wird bei A unvulkanisiertes Kautschukmaterial in einer Breite aufgegeben, die maximal der Kammwalzenbreite entspricht. Das Material sollte bevorzugt in solchen Längenabschnitten aufgegeben werden, die in etwa bereits der gewünschten Länge der Kautschukstränge 18 entspricht. Das Kautschukmaterial wird von den bevorzugt senkrechten Flanken 19 der Schneidzahnscheiben 12 und der Friktionsscheiben 13 (bei Bedarf können die Flanken 19 auch anders ausgebildet sein) in Stränge 18 einer bestimmten Breite zerschnitten, die gleichzeitig mit Hilfe der Zahnung 11 mit einer zerklüfteten Oberfläche versehen werden.

Bei der Verarbeitung von Langfellen oder Kautschukballen kommen die Fütterungswalzen 16 gemäß Fig. 2 zum Einsatz. Mit ihnen wird das Material in den Spalt 14 zwischen den Kammwalzen 1, 2 eingefahren. Durch Anhalten oder Reversieren der Fütterungswalzen 16 kommt es zum Materialabriß. Auf diese Weise wird die gewünschte Länge der Kautschukstränge 18 erzeugt.

Die rechenartigen Abstreifer 15 sorgen dafür, daß die Stränge 18 nicht zwischen den Schneidzahnscheiben umlaufen können und gleichzeitig in die gewünschte Richtung abgefördert werden.

Es sollte angemerkt werden, daß im Rahmen dieser Erfindung dem Begriff der Zahnung 11 eine sehr allgemeine Bedeutung in dem Sinne zukommt, daß auch andersförmige Oberflächengestaltungen der Kammwalzen 1, 2 mit Erhebungen und Vertiefungen, die eine Zerklüftung des Kautschukmaterials bewirken, darunter fallen sollen.

## Patentansprüche

1. Vorrichtung zum Aufbereiten von unvulkanisiertem Kautschuk, der am Ende in Form von Strängen mit zerklüfteter Oberfläche für die Beschickung von Mischaggregaten vorliegen soll, unter Verwendung von ineinandergreifenden Kammwalzen (Schneidscheibenwellen), **dadurch gekennzeichnet**, daß zumindest die Schneidscheiben (12) der einen Kammwalze (1 oder 2) zusätzlich mit einer Zahnung (11) mit einem Messerschliff versehen sind.

2. Vorrichtung nach Anspruch 1, dadurch gekennzeichnet, daß bei beiden Kammwalzen (1,2) jeweils die Schneidscheiben (12) mit dem größeren Durchmesser radial außen mit einer Zahnung (11) versehen sind.

3. Vorrichtung nach Anspruch 1 oder 2, dadurch gekennzeichnet, daß der Durchmesser der Kammwalzen (1,2) im Bereich der größeren Schneidzahnscheiben (12) zwischen 200 und 800 mm liegt und daß sich auf der Umfangslänge einer jeden Schneidzahnscheibe (12) zwischen 30 und 300 Zähne befinden.

4. Vorrichtung nach einem der vorhergehenden Ansprüche, dadurch gekennzeichnet, daß der Durchmesser einer jeden Kammwalze (1,2) im Bereich der größeren Schneidzahnscheiben (12) und der kleineren Friktionsscheiben (13) um 60 bis 200 mm differiert.

5. Vorrichtung nach Anspruch 1, dadurch gekennzeichnet, daß sich zwischen den benachbarten Außenflächen der beiden Kammwalzen (1,2) ein Luftspalt (14) von 1 bis 10 mm befindet.

6. Vorrichtung nach einem der vorhergehenden Ansprüche, dadurch gekennzeichnet, daß die Zahntiefe der Zahnung (11) 3 bis 10 mm beträgt.

7. Vorrichtung nach einem der vorhergehenden Ansprüche, dadurch gekennzeichnet, daß die Schneidzahnscheiben (12) und die Friktionsscheiben (13) beider Kammwalzen (1,2) jeweils identische Durchmesser aufweisen und die Vorrichtung mit einem für beide Walzen gemeinsamen Antrieb (7) versehen ist.

8. Vorrichtung nach einem der vorhergehenden Ansprüche, dadurch gekennzeichnet, daß den Kammwalzen (1,2) Abstreifer (15) nachgeschaltet sind.

9. Vorrichtung nach einem der vorhergehenden Ansprüche, dadurch gekennzeichnet, daß den Kammwalzen (1,2) zweiFütterungswalzen (16) vorgeschaltet sind.

10. Vorrichtung nach Anspruch 9, dadurch gekennzeichnet, daß die Fütterungswalzen (16) mit einer Riffelung (17) versehen sind.

## Claims

1. Apparatus for preparing unvulcanised rubber, which is ultimately to be in the form of extruded bodies having a fissured surface for loading into mixing assemblies, by employing intermeshing cog rollers (rollers with cutting discs), characterised in that at least the cutting discs (12) of one cog roller (1 or 2) are additionally provided with a toothing (11) by being ground by a knife.

2. Apparatus according to claim 1, characterised in that, in the case of both cog rollers (1, 2), the cutting discs (12) having the greater diameter are each provided radially externally with a toothing (11).

3. Apparatus according to claim 1 or 2, characterised in that the diameter of the cog rollers (1, 2) is between 200 and 800 mm in the region of the greater toothed cutting discs (12), and in that between 30 and 300 teeth are provided over the circumferential length of each toothed cutting disc (12).

4. Apparatus according to one of the preceding claims, characterised in that the diameter of each cog roller (1, 2) differs by between 60 and 200 mm in the region of the greater toothed cutting discs (12) and the smaller friction discs (13).

5. Apparatus according to claim 1, characterised in that an air gap (14) of between 1 and 10 mm is provided between the adjacent external faces of the two cog rollers (1, 2).

6. Apparatus according to one of the preceding claims, characterised in that the depth of the toothing (11) is between 3 and 10 mm.

7. Apparatus according to one of the preceding claims, characterised in that the toothed cutting discs (12) and the friction discs (13) of both cog rollers (1, 2) each have identical diameters, and the apparatus is provided with a drive means (7) common to both rollers.

8. Apparatus according to one of the preceding claims, characterised in that scrapers (15) are disposed at the outlet end of the cog rollers (1, 2).

9. Apparatus according to one of the preceding claims, characterised in that two feed rollers (16) are disposed at the inlet end of the cog rollers (1, 2).

10. Apparatus according to claim 9, characterised in that the feed rollers (16) are provided with a corrugation (17).

## Revendications

1. Dispositif pour préparer du caoutchouc non vulcanisé, qui doit se présenter finalement sous la forme de brins comportant une surface fissurée en vue de l'alimentation de groupes mélangeurs, en utilisant des cylindres-peigne (arbres à disques de coupe) engrenant l'un dans l'autre, caractérisé en ce qu'au moins les disques de coupe (12) d'un des cylindres-peigne (1 ou 2) sont pourvus additionnellement d'une denture (11) avec arêtes de coupe.

2. Dispositif selon la revendication 1, caractérisé en ce que, dans les deux cylindres-peigne (1, 2), respectivement les disques de coupe (12) ayant le grand diamètre sont pourvus d'une denture (11) radialement à l'extérieur.

3. Dispositif selon une des revendications 1 ou 2, caractérisé en ce que le diamètre des cylindres-peigne (1, 2) est compris entre 200 et 800 mm dans la zone des gros disques dentés de coupe (12) et en ce qu'il est prévu entre 30 et 300 dents sur la longueur circonférentielle de chaque disque denté de coupe (12).

4. Dispositif selon une des revendications précédentes, caractérisé en ce que le diamètre de chaque cylindre-peigne (1, 2) présente une différence de 60 à 200 mm entre les gros disques dentés de coupe (12) et les petits disques de friction (13).

5. Dispositif selon la revendication 1, caractérisé en ce qu'il est prévu entre les surfaces extérieures adjacentes des deux cylindres-peigne (1, 2) un intervalle d'air (14) de 1 à 10 mm.

6. Dispositif selon une des revendications précédentes, caractérisé en ce que la profondeur des dents de la denture (11) est comprise entre 3 et 10 mm.

7. Dispositif selon une des revendications précédentes, caractérisé en ce que les disques dentés de coupe (12) et les disques de friction (13) des deux cylindres-peigne (1, 2) ont des diamètres respectivement identiques et le dispositif est pourvu d'un entraînement (7) commun pour les deux cylindres.

8. Dispositif selon une des revendications précédentes, caractérisé en ce que des racleurs (15) sont disposés après les cylindres-peigne (1, 2).

9. Dispositif selon une des revendications précédentes, caractérisé en ce que deux cylindres d'alimentation (16) sont disposés en amont des cylindres-peigne (1, 2).

10. Dispositif selon la revendication 9, caractérisé en ce que les cylindres d'alimentation (16) sont pourvus de cannelures (17).
